# FASCICULE DE BREVET EUROPEEN

(11) **EP 0 441 727 B1**
(45) Date de publication et mention de la délivrance du brevet: **11.08.1993**
(21) Numéro de dépôt: 91420044.9
(22) Date de dépôt: 08.02.1991
(51) Int. Cl.: F16L 37/28

(54) **Raccord de canalisations du type à clapets tournants**
Kanalverbindung mit drehbaren Verschlussteilen
Conduit connection with rotatable shut-off elements

(30) Priorité: 08.02.1990 FR 9001709
(43) Date de publication de la demande: 14.08.1991
(73) Titulaire: S.A. DES ETABLISSEMENTS STAUBLI (France), 74210 Faverges (FR)
(72) Inventeur: Truchet, Gaston, F-74210 Faverges (FR)
(74) Mandataire: Monnier, Guy

(56) Documents cités:
- EP-A- 0 202 798
- WO-A-89/01587
- US-A- 3 078 068
- US-A- 3 545 490
- US-A- 4 181 149

## Description

La présente invention a trait aux dispositifs de raccordement pour la jonction amovible des canalisations et elle vise plus particulièrement les raccords du type à clapets tournants.

On sait que les dispositifs de ce genre comprennent deux éléments qui sont fixés aux extrémités des canalisations à relier en étant pourvus de moyens propres à permettre leur assemblage mutuel démontable. A l'intérieur de chaque élément est monté un clapet à profil substantiellement sphérique, lequel clapet est percé d'un alésage traversant orienté parallèlement à l'axe du raccord. Ce clapet est monté à articulation dans le corps de l'élément considéré à l'aide d'un pivot transversal qui est décalé par rapport à son centre, de façon à ce que par poussée lors de l'assemblage des deux éléments du raccord, ledit clapet, retenu dans le sens axial par un piston associé à des moyens élastiques, soit obligé de basculer à l'encontre de ces moyens élastiques pour passer de la position de fermeture pour laquelle son alésage est orienté de manière substantiellement transversale, à la position d'ouverture pour laquelle les axes de l'alésage et du raccord coïncident, et vice versa.

Dans les constructions classiques, le pivot du clapet est généralement constitué par deux goujons qui sont portés par la tête d'un fut tubulaire orienté de manière axiale de façon à ce que ladite tête se trouve engagée à l'intérieur de l'alésage du clapet et à ce que les goujons précités coopèrent avec des empreintes ménagées dans la paroi dudit alésage. Il est en outre prévu, sur la tête sus-mentionnée du fut axial tubulaire, des moyens propres à assurer le guidage correct du clapet lors de son basculement.

On comprend qu'un tel agencement implique nécessairement une contruction relativement compliquée et des opérations de montage assez malaisées, ce qui aboutit à un renchérissement sensible du prix de revient. Par ailleurs, la présence du fut axial et des axes de pivotement à l'intérieur de l'alésage du clapet gêne évidemment les opérations de nettoyage qui nécessitent le démontage complet des pièces du raccord.

Le document EP.A.0 202 798 (FREMY) montre une solution voisine qui présente le même inconvénient puisque le guidage pivotant de chaque clapet est opéré par deux goujons fixes qui sont engagés avec jeu dans des logements radiaux pratiqués dans les parois internes de l'ouverture à section en V ménagée dans ledit clapet pour le passage du fluide véhiculé par les canalisations envisagées. Ici également le fluide vient au contact des organes qui forment le pivot de chaque clapet.

C'est à ces inconvénients qu'entend principalement remédier la présente invention, laquelle a pour objet le raccord pour canalisations tel que défini à la revendication 1 unique.

En fait l'invention consiste à assurer le montage pivotant en même temps que le guidage du clapet tournant à l'intérieur du corps de chaque élément du raccord, à l'aide d'un pivot formé de deux goujons latéraux qui sont portés par la face interne des branches d'une fourche extérieure solidaire du corps précité et qui coopèrent avec jeu avec des logements pratiqués dans la paroi extérieure dudit clapet.

On conçoit qu'on obtient de la sorte une construction très simplifiée, qui permet en outre le nettoyage de l'espace intérieur du raccord par passage d'un courant liquide, sans aucun démontage puisque le fluide qui traverse ledit raccord en utilisation normale vient au seul contact de la paroi intérieure de l'alésage de chaque clapet.

Le dessin annexé, donné à titre d'exemple, permettra de mieux comprendre l'invention, les caractéristiques qu'elle présente et les avantages qu'elle est susceptible de procurer :

Fig. 1 est une coupe axiale schématique d'un raccord à clapets tournants établi conformément à la présente invention.

Fig. 2 reproduit fig. 1 après assemblage des deux éléments constitutifs du dispositif en vue du raccordement des canalisations considérées.

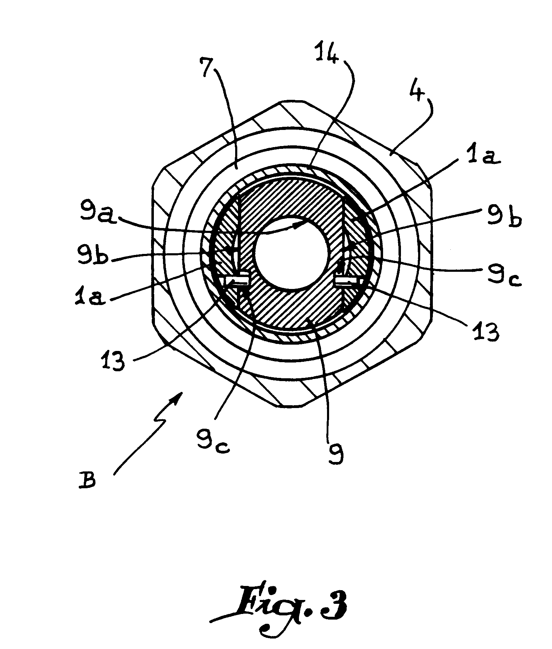

Fig. 3 est une coupe transversale suivant le plan indiqué en III-III en fig. 2.

Fig. 4 montre en perspective, préalablement à leur montage dans le corps et à leur assemblage, les pièces principales constituant l'un ou l'autre des deux éléments du raccord.

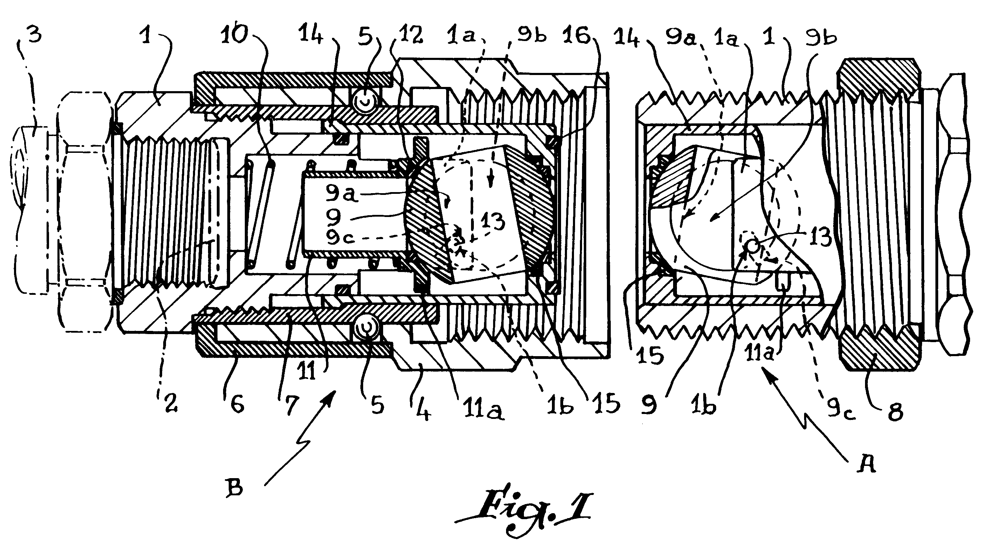

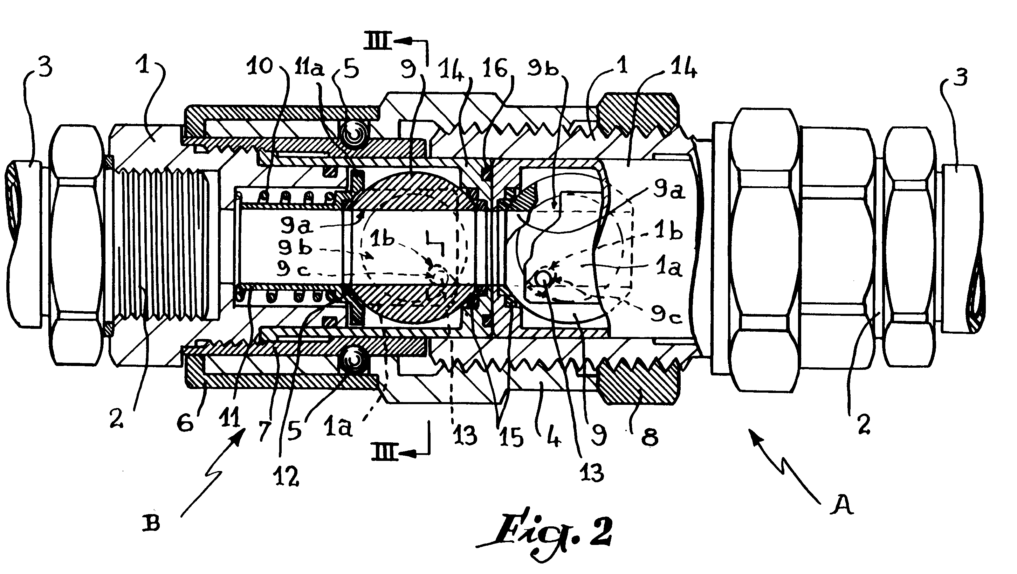

Le raccord représenté en fig. 1 et 2 est, à la façon usuelle, constitué par deux éléments A et B propres à être fixés aux extrémités des canalisations à relier et à être assemblés l'un à l'autre de manière démontable. Chacun de ces éléments comprend un corps tubulaire 1 dont la partie arrière est agencée pour recevoir, par vissage dans le cas considéré, un embout 2 solidaire d'une canalisation flexible 3.

Pour l'assemblage démontable des deux éléments A et B, on peut avoir recours à tout système connu. Dans l'exemple de réalisation représenté, on a supposé que le corps 1 de l'élément A était prévu fileté pour se visser dans une bague tournante 4 retenue axialement sur l'élément B par des billes 5 maintenues entre un manchon extérieur 6 solidaire de ladite bague 4 et un fourreau intérieur 7 vissé sur le corps 1 dudit élément B ; tout risque de dévissage intempestif de la bague 4 est interdit par un contre-écrou 8 porté par l'élément A.

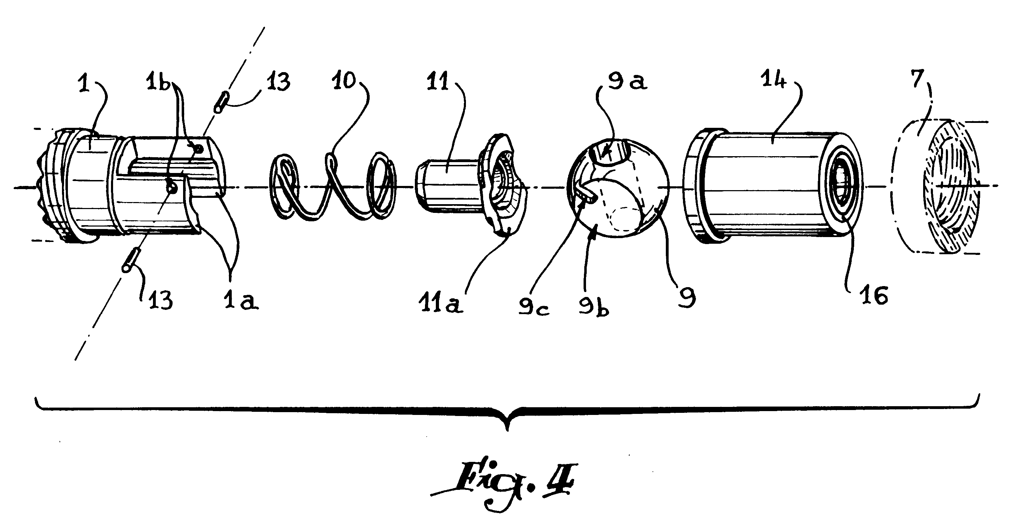

A l'intérieur du corps 1 de chaque élément A et B est monté un clapet tournant 9 à profil substantiellement sphérique, ledit clapet étant percé diamétralement d'un alésage débouchant 9a. Le mode de montage de chaque clapet 9 dans le corps 1 correspondant ressort particulièrement bien de l'examen de fig. 4.

Comme montré, le corps 1 comporte un prolongement axial tubulaire qui présente la forme d'une fourche entre les deux branches longitudinales 1a de laquelle viennent s'engager un ressort 10 et un piston 11 ; l'extrémité de ce dernier qui est tournée en direction du clapet 9 s'élargit en 11a pour recevoir un joint torique 12 (fig. 1) que le ressort 10 maintient fermement appliqué contre le clapet 9. Celui-ci présente deux faces extérieures planes 9b (fig. 4) orientées parallèlement l'une à l'autre et dont chacune présente un logement ou empreinte 9c à profil allongé suivant une diagonale de la face considérée ; dans chaque logement 9c est engagée l'extrémité d'un goujon transversal 13 rendu solidaire de l'une des branches 1a moyennant introduction dans un logement 1b.

Il convient d'observer que les logements 1b sont décalés latéralement par rapport à l'axe médian de chacune des branches 1a. De la même manière, les logements 9c sont déportés sur les faces planes 9b par rapport au centre de celles-ci, de sorte que les deux goujons 13 définissent pour chaque clapet 9 un pivot excentré tel que lorsque ledit clapet reçoit un effort de poussée orienté longitudinalement d'avant en arrière, il bascule par rotation pour passer de la position de fermeture suivant fig. 1 à la position d'ouverture suivant fig. 2.

L'effort de poussée sus-mentionné est exercé par un poussoir tubulaire 14 qui coulisse axialement sur le prolongement axial ou fourche du corps 1 de chaque élément A ou B. Chaque poussoir 14 comporte un joint annulaire interne 15 contre lequel vient s'appliquer de manière étanche le clapet 9 sous l'effet du ressort 10. On notera par ailleurs que l'un des deux poussoirs 14 (à savoir celui monté à l'intérieur de l'élément B dans le cas considéré) est doté d'un joint annulaire 16 fixé contre la paroi extérieure transversale ou fond du poussoir, de façon à venir porter contre le fond lisse du poussoir 14 de l'élément A lors de l'assemblage des deux éléments A et B, en opérant de la sorte l'étanchéité du raccordement.

Pour exposer le fonctionnement du dispositif ci-dessus décrit, on partira de la position désaccouplée suivant fig. 1. Pour l'assemblage des deux éléments A et B, l'élément mâle A est engagé dans le débouché antérieur de la bague 4 ; au cours du vissage mutuel des deux éléments, les fonds des deux poussoirs 14 viennent au contact l'un de l'autre, de sorte que lesdits poussoirs sont repoussés axialement. Chacun des deux clapets 9 est lui-même repoussé vers l'intérieur par son poussoir 14, si bien que par suite du décalage du pivot formé par les deux goujons 13, il est obligé de basculer. On obtient finalement la position assemblée illustrée en fig. 2, les deux clapets 9 étant ainsi amenés en position ouverte pour laquelle les deux alésages 9a sont orientés suivant l'axe du dispositif.

L'étanchéité au cours des manoeuvres d'assemblage est assurée par les joints 12 et 15 qui, sous l'effet du ressort 10 agissant sur le piston 11 associé à chaque clapet 9, sont maintenus au contact permanent de la paroi extérieure sphérique de celui-ci. Le démontage des deux éléments du raccord implique seulement le désaccouplement des deux éléments A et B, les clapets 9 revenant en position de fermeture sous l'effet des ressorts 10.

La construction d'un tel raccord est fort simple, les opérations de montage étant en outre susceptibles d'être effectuées sans difficulté particulière à l'aide d'automates. On observera de plus qu'à la position accouplée suivant fig. 2, le fluide qui traverse le raccord ne vient au contact que de la paroi interne des alésages 9a des clapets 9, de sorte que le nettoyage du dispositif est susceptible d'être effectué par simple passage d'un courant liquide, sans aucun démontage.

Il va de soi que les empreintes ou logements 9c ménagés sur les faces extérieures planes 9b de chaque clapet 9 peuvent présenter un profil circulaire de diamètre supérieur à celui des goujons 13, au lieu du profil allongé diagonalement illustré en fig. 4.

## Revendications

1. Raccord pour canalisations, du type dans lequel chacun des deux éléments démontables (A, B) fixés aux extrémités des canalisations (3) à relier renferme un clapet substantiellement sphérique (9) qui est monté à pivotement dans le corps (1) de chaque élément suivant un axe transversal déporté par rapport à son centre et qui est guidé de façon à basculer sous l'effet de la poussée axiale exercée sur lui d'une part par un poussoir (14) qui recule lors de l'assemblage des deux éléments, d'autre part par un piston (11) sollicité par des moyens élastiques (10), caractérisé en ce que le pivotement et le guidage de chaque clapet (9) est assuré par deux goujons transversaux opposés (13) qui sont rendus solidaires des branches (1a) d'une fourche fixe solidaire du corps de façon à embrasser le piston (11) et le clapet, et qui sont engagés avec jeu dans des logements (9c) prévus dans la paroi extérieure (9b) de ce clapet.

## Patentansprüche

1. Anschluß für Leitungen, des Typs, bei dem jedes der beiden demontierbaren Elemente (A, B), befestigt an den Enden der zu verbindenden Leitungen (3), ein im wesentlichen kugelförmiges Ventil (9) umschließt, das eingebaut ist in den Körper (1) jedes Elements, schwenkbar um eine bezüglich seines Zentrums verschobene Querachse, und das so geführt wird, daß es kippt unter der Wirkung der auf es ausgeübten Axialkraft, einerseits durch einen Drücker (14), der sich rückwärtsbewegt beim Zusammenschluß der beiden Elemente, andererseits durch einen Kolben (11), belastet durch elastische Mittel (10),
dadurch **gekennzeichnet,**
daß die Drehung und die Führung jedes Ventils (9) gewährleistet wird durch zwei quergerichtete, sich gegenüberliegende Stiftbolzen (13), die fest verbunden sind mit den Armen (1a) einer feststehenden, so mit dem Körper verbundenen Gabel, daß sie den Kolben (11) und das Ventil umfaßt, und die mit Spiel eingreifen in die Sitze (9c), ausgebildet in der Außenwand (9b) dieses Ventils.

## Claims

1. A connection for conduits, of the type in which each of the two detachable elements (A, B) fixed to the ends of the conduits (3) to be connected contains a substantially spherical flap valve (9) which is mounted to pivot within the body (1) of each element along a transversal axis which is offset relative to the centre thereof, and which is guided so as to swing under the effect of the axial thrust exerted thereon firstly by a pusher (14) which retreats when the two elements are assembled and secondly by a piston (11) which is acted upon by elastic means (10), characterised in that the pivoting and the guiding of each flap valve (9) is ensured by two opposing transverse pins (13) which are made integral with the branches (1a) of a fixed fork which is integral with the body so as to encompass the piston (11) and the flap valve, and which are engaged with play in the housings (9c) provided in the outer wall (9b) of said flap valve.
